# EUROPEAN PATENT APPLICATION

(11) **EP 3 761 530 A1**
(43) Date of publication of application: **06.01.2021**
(21) Application number: 19761263.3
(22) Date of filing: 20.02.2019
(51) Int. Cl.: H04B 10/294, H04B 3/06

(54) **EQUALIZER DEVICE, COMMUNICATION SYSTEM AND EQUALIZATION METHOD**

(30) Priority: 27.02.2018 JP 2018033232
(71) Applicant: NEC Corporation, 108-8001 Tokyo (JP)
(72) Inventor: TANEHASHI Masao, Tokyo 108-8001 (JP)
(74) Representative: Vossius & Partner Patentanwälte Rechtsanwälte mbB
(86) International application number: PCT/JP2019/006232
(87) International publication number: WO 2019/167736

(57) **Abstract**

In order to enable reducing the number of optical devices while maintaining a configured number of tilt levels, and to output an optical signal with a constant signal strength, this equalizer device is provided with: an optical matrix switch which comprises a first terminal group including at least two first terminals and a second terminal group including at least two second terminals; an equalizer group which includes at least two equalizers connected at the input terminal to one of the second terminals included in the second terminal group and connected at the output terminal to one of the first terminals included in the first terminal group; a variable attenuator which is connected to one of the second terminals included in the second terminal group and which attenuates an inputted optical signal; and a control means which switches the connection state between the first terminals and the second terminals and which sets the amount of attenuation in the variable attenuator.

## Description

### [Technical Field]

The present invention relates to an equalizer device, a communication system, and an equalization method for equalizing a transmission characteristic of an optical signal. The present invention particularly relates to an equalizer device, a communication system, and an equalization method for equalizing a tilt level of an optical signal used in a submarine cable system.

### [Background Art]

It is required in a submarine cable system to secure transmission quality of an optical signal transmitted over a long distance. In order to achieve the above, it is desirable to make a tilt level of an optical profile of a transmitted optical signal flat (0 dB) from the beginning of life (BOL) to the end of life (EOL). However, a loss increases with a repair of the submarine cable system and/or aging degradation, and therefore the tilt level of the optical profile changes. In order to keep the tilt level of the optical profile flat, a tilt equalizer device capable of compensating for the tilt level is used.

PTL 1 discloses an optical amplification repeater transmission system capable of adjusting an optical gain profile between an input fiber transmission line and an output fiber transmission line to a proper state. The system in PTL 1 includes optical transmission systems for adjusting a tilt level of each spectrum of an optical signal transmitted over an optical fiber transmission line installed between a transmission terminal and a reception terminal at a required interval.

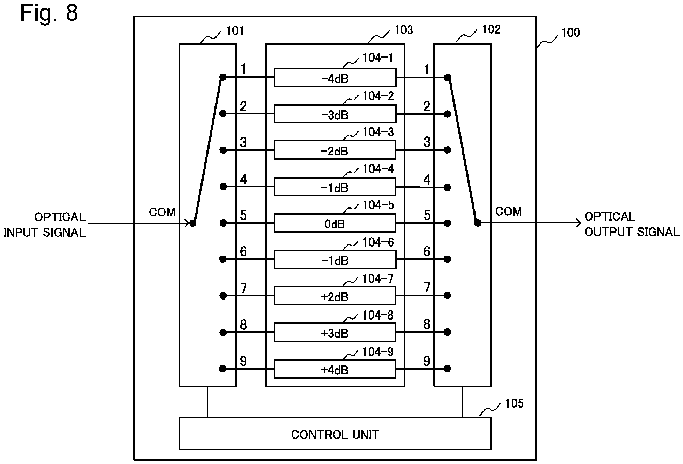

Fig. 8 is a schematic diagram illustrating a configuration of a tilt equalizer device 100 based on a related art. The tilt equalizer device 100 includes a first optical switch 101, a second optical switch 102, an equalizer group 103, and a control unit 105. The equalizer group 103 is configured with a plurality of equalizers 104-1 to 9 with different tilt levels. In the example in Fig. 8, the equalizer group 103 is configured with nine equalizers 104-1 to 9 tilt levels of which ranging from -4 dB to +4 dB.

The first optical switch 101 includes a COM terminal to which an optical input signal is input and a plurality of output terminals connection between which and the COM terminal can be changed. Each of the plurality of output terminals on the first optical switch 101 is connected to one of the equalizers 104-1 to 9. The second optical switch 102 includes a COM terminal from which an optical output signal is output and a plurality of input terminals connection between which and the COM terminal can be changed. Each of the plurality of input terminals on the second optical switch 102 is connected to one of the equalizers 104-1 to 9. The control unit 105 changes connection states of the first optical switch 101 and the second optical switch 102 according to a tilt level of an optical profile.

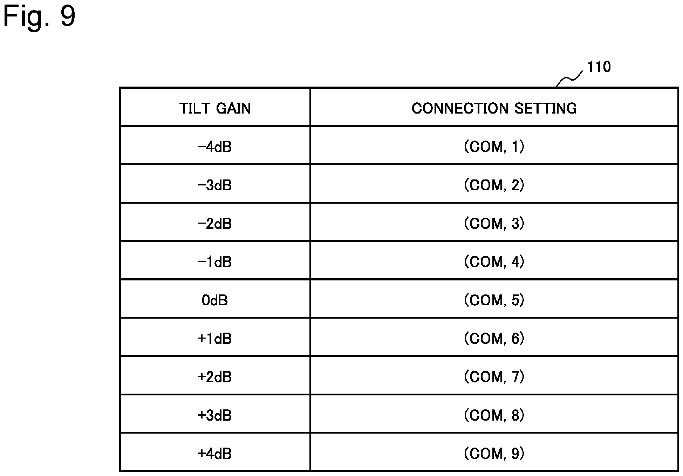

Fig. 9 is a switch setting table 110 summarizing switch connection settings for compensating for a tilt level of an optical profile in a range of -4 dB to +4 dB. Combinations of the COM terminal with the input terminals 1 to 9 and the output terminals 1 to 9, each combination being related to each tilt level of compensation, are indicated in parentheses in connection setting fields in Fig. 9. As illustrated in Fig. 9, the tilt equalizer device 100 can compensate for a tilt level of an optical profile in a range of -4 dB to +4 dB in units of dB.

For example, when compensating for a tilt level of an optical profile by -4 dB, the control unit 105 outputs a control signal for closing (COM, 1) to the first optical switch 101 and the second optical switch 102. Consequently, the COM terminal is connected to the output terminal 1 in the first optical switch 101, and the input terminal 1 is connected to the COM terminal in the second optical switch. An optical input signal input from the COM terminal on the first optical switch 101 is input to the equalizer 104-1 from the output terminal 1 on the first optical switch 101, the tilt level of the optical signal is compensated for by -4 dB, and then the tilt-level-compensated optical signal is output to the input terminal 1 on the second optical switch 102. The optical signal input to the input terminal 1 on the second optical switch 102 is output from the COM terminal as an optical output signal.

### [Citation List]

### [Patent Literature]

PTL 1: Japanese Unexamined Patent Application Publication No. 2001-237776

### [Summary of Invention]

### [Technical Problem]

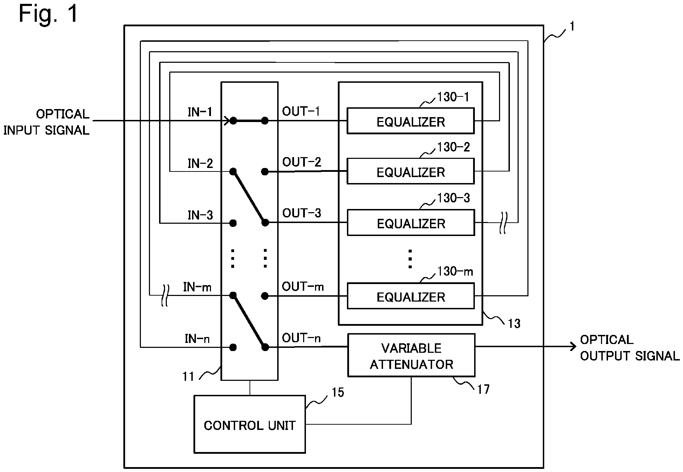

According to the related art illustrated in Fig. 8, a tilt level of an optical profile can be variably controlled by configuring an equalizer group with a plurality of equalizers with different tilt levels. However, in the related art illustrated in Fig. 1, extending an adjustment range of a tilt level or fining down an adjustment unit increases the number of equalizers. Increase in the quantity of optical devices used in a single signal line decreases the number of signal lines tilt levels of which being adjustable by a single tilt equalizer device. In a multicore system requiring many signal lines, increase in the number of equalizers raises a system price.

In a case of variably controlling a tilt level of an optical profile by a plurality of equalizers, when an amount of loss of each equalizer varies, a signal strength of an optical output signal from a tilt equalizer device changes, and variation occurs in a signal strength of an optical signal input to a repeater in a subsequent stage. When a signal strength of an optical input signal to a repeater changes from an optimum value, and a deviation in a signal strength accumulates in an entire submarine cable system, it becomes difficult to secure transmission quality. Accordingly, a tilt equalizer device is designed in such a way as to minimize a change in an amount of loss even when equalizers are changed. Accordingly, when amounts of loss of tilt equalizer devices inserted in a submarine cable system vary, spare tilt equalizer devices with different specifications according to an amount of loss need to be prepared.

An object of the present invention is to, in order to resolve the aforementioned problems, provide an equalizer device being capable of reducing the number of optical devices while maintaining the number of settings of a tilt level and also being capable of outputting an optical signal with a constant signal strength.

### [Solution to Problem]

An equalizer device according to an aspect of the present invention includes: an optical matrix switch including a first terminal group including at least two first terminals and a second terminal group including at least two second terminals; an equalizer group including at least two equalizers, an input end of each of the equalizers being connected to one of the second terminals included in the second terminal group, and an output end of each of the equalizer being connected to one of the first terminals included in the first terminal group; a variable attenuator being connected to one of the second terminals included in the second terminal group and attenuating an input optical signal; and a control means for changing a connection state between the first terminal and the second terminal, and also setting an amount of attenuation in the variable attenuator.

A communication system according to an aspect of the present invention includes: an optical matrix switch including a first terminal group including at least two first terminals and a second terminal group including at least two second terminals; an equalizer group including at least two equalizers, an input end of each of the equalizers being connected to one of the second terminals included in the second terminal group, and an output end of each of the equalizer being connected to one of the first terminals included in the first terminal group; a variable attenuator being connected to one of the second terminals included in the second terminal group and attenuating an input optical signal; an equalizer device that includes a control means for changing a connection state between the first terminal and the second terminal, and also setting an amount of attenuation by the variable attenuator; at least two repeaters; and an optical cable connecting the repeater to the equalizer device.

An equalization method according to an aspect of the present invention, in an equalizer device including: an optical matrix switch including a first terminal group including at least two first terminals and a second terminal group including at least two second terminals; an equalizer group including at least two equalizers, an input end of each of the equalizers being connected to one of the second terminals included in the second terminal group, and an output end of each of the equalizer being connected to one of the first terminals included in the first terminal group; and a variable attenuator being connected to one of the second terminals included in the second terminal group and attenuating an optical signal input to the optical matrix switch according to an amount of loss of the optical signal, includes changing a connection state between the first terminal and the second terminal, and also compensating for a tilt level of an externally input optical signal by setting an amount of attenuation by the variable attenuator according to an amount of loss of an optical signal input to the optical matrix switch and outputting a tilt-level-compensated optical signal as an optical output signal.

### [Advantageous Effects of Invention]

The present invention can provide an equalizer device being capable of reducing the number of optical devices while maintaining the number of settings of a tilt level and also being capable of outputting an optical signal with a constant signal strength.

### [Brief Description of Drawings]

[Fig. 1] Fig. 1 is a schematic diagram illustrating an example of a configuration of a tilt equalizer device according to a first example embodiment of the present invention.
[Fig. 2] Fig. 2 is a schematic diagram for illustrating an example of a submarine cable system in which the tilt equalizer device according to the first example embodiment of the present invention is installed.
[Fig. 3] Fig. 3 is a schematic diagram illustrating an example of a configuration of a tilt equalizer device according to a second example embodiment of the present invention.
[Fig. 4] Fig. 4 is a switch setting table illustrating examples of a connection setting of a matrix switch included in the tilt equalizer device according to the second example embodiment of the present invention.
[Fig. 5] Fig. 5 is a schematic diagram illustrating an example of a configuration of a tilt equalizer device according to a third example embodiment of the present invention.
[Fig. 6] Fig. 6 is a switch setting table illustrating examples of a connection setting of a matrix switch included in the tilt equalizer device according to the third example embodiment of the present invention.
[Fig. 7] Fig. 7 is a schematic diagram illustrating an example of a configuration of a communication system according to a fourth example embodiment of the present invention.
[Fig. 8] Fig. 8 is a schematic diagram illustrating an example of a configuration of a tilt equalizer device based on a related art.
[Fig. 9] Fig. 9 is a switch setting table illustrating examples of a connection setting of a switch included in the tilt equalizer device based on the related art.

### [Example Embodiment]

Example embodiments will be described below by use of drawings. Although technically preferred limitations for implementing the present invention are applied to the example embodiments described below, the scope of the invention is not limited thereto. In all drawings used for description of the following example embodiments, the same or similar parts are given the same or similar reference signs unless there is a specific reason. In the following example embodiments, repeated description of a similar configuration or operation may be omitted. A direction of an arrow in a drawing indicates an example and does not limit a signal direction between blocks.

### (First Example Embodiment)

First, a tilt equalizer device according to a first example embodiment of the present invention will be described with reference to drawings. The tilt equalizer device (also referred to as an equalizer device) according to the present example embodiment is inserted in at least one of spans between a plurality of repeaters constituting a submarine cable system. The tilt equalizer device according to the present example embodiment takes an optical signal from a repeater in a previous stage as an input, compensates for a tilt level of the input optical signal, and outputs the tilt-level-compensated optical signal to a repeater in a subsequent stage.

Fig. 1 is a schematic diagram illustrating an example of a configuration of a tilt equalizer device 1 according to the present example embodiment. As illustrated in Fig. 1, the tilt equalizer device 1 includes a matrix switch 11, an equalizer group 13, a control unit 15, and a variable attenuator 17. The equalizer group 13 is configured with a plurality of equalizers 130. Fig. 1 illustrates an example of the equalizer group 13 being configured with an equalizer 130-1, an equalizer 130-2, an equalizer 130-3,..., and an equalizer 130-m (where m is a natural number).

The matrix switch 11 is a multi-input multi-output optical matrix switch. The matrix switch 11 includes an input terminal group (also referred to as a first terminal group) including a plurality of input terminals IN (also referred to as first terminals) and an output terminal group (also referred to as a second terminal group) including a plurality of output terminals OUT (also referred to as second terminals). Fig. 1 illustrates the matrix switch 11 including n input terminals IN-1 to n and n output terminals OUT-1 to n (where n is a natural number greater than m). A form of the matrix switch 11 is not particularly limited.

An optical input signal is externally input to one of the plurality of input terminals IN. Fig. 1 illustrates an example of an optical input signal being input to the input terminal IN-1. For example, an optical input signal from a repeater in a previous stage is input to the input terminal IN-1. An input terminal IN to which an optical input signal is externally input is hereinafter also referred to as an external input terminal.

Each of the plurality of input terminals IN is connected to one of the plurality of output terminals OUT in accordance with a control signal from the control unit 15. Fig. 1 illustrates an example of the input terminal IN-1 is connected to the output terminal OUT-1, the input terminal IN-2 is connected to the output terminal OUT-3, and the input terminal IN-m is connected to the output terminal OUT-n, respectively.

An optical output signal is output from one of the plurality of output terminals OUT toward the variable attenuator 17. Fig. 1 illustrates an example of an optical output signal being output from the output terminal OUT-n. For example, an optical output signal output from the output terminal OUT-n is attenuated in the variable attenuator 17 and then is output toward a repeater in a subsequent stage. An output terminal OUT from which an optical signal is output is hereinafter also referred to as an external output terminal.

An output terminal OUT other than the external output terminal is connected to one of the plurality of equalizers 130 constituting the equalizer group 13. Fig. 1 illustrates an example of the output terminal OUT-lis connected to the equalizer 130-1, the output terminal OUT-2 is connected to the equalizer 130-2, the output terminal OUT-3 is connected to the equalizer 130-3,..., and the output terminal OUT-m is connected to the equalizer 130-m, respectively.

The equalizer group 13 is configured with a plurality of the equalizers 130. Fig. 1 illustrates an example of the equalizer group 13 being configured with the equalizer 130-1, the equalizer 130-2, the equalizer 130-3,..., and the equalizer 130-m. For example, the plurality of equalizers 130 constituting the equalizer group 13 adjust an input optical signal to tilt levels different from one another. For example, at least one set of equalizers 130 out of the plurality of equalizers 130 constituting the equalizer group 13 adjust an input optical signal to the same tilt level. A tilt level adjusted by the equalizer group 13 is freely set according to a tilt level of an optical input signal.

An input end of each of the plurality of equalizers 130 constituting the equalizer group 13 is connected to one of the output terminals OUT on the matrix switch 11. Fig. 1 illustrates an example of the equalizer 130-1 is connected to the output terminal OUT-1, the equalizer 130-2 is connected to the output terminal OUT-2, the equalizer 130-3 is connected to the output terminal OUT-3,..., and the equalizer 130-m is connected to the output terminal OUT-m, respectively.

An output end of each of the plurality of equalizers 130 constituting the equalizer group 13 is connected to one of the input terminals IN on the matrix switch 11. Fig. 1 illustrates an example of the equalizer 130-1 is connected to the input terminal IN-2, the equalizer 130-2 is connected to the input terminal IN-3,..., and the equalizer 130-m is connected to the input terminal IN-n, respectively. In other words, the equalizer 130-1 and the equalizer 130-3 are connected in series in the example in Fig. 1.

A tilt level of an optical input signal input to an equalizer 130 is compensated for by the total of tilt levels adjusted by the equalizers 130. The tilt-level-compensated optical signal is tilt level adjusted again by another equalizer 130 through the matrix switch 11 or is output as an optical output signal. Specifically, a tilt level of an optical input signal input to an equalizer 130 is compensated for by the total of tilt levels adjusted by equalizers 130 connected to output terminals OUT connected to input terminals IN on the matrix switch 11. In the example in Fig. 1, a tilt level of an optical input signal is compensated for by the total of tilt levels adjusted by the equalizer 130-1 and the equalizer 130-3, according to the connection state of the matrix switch 11.

The control unit 15 (also referred to as a control means) transmits, to the matrix switch 11, a control signal for changing a connection state of the matrix switch 11 according to a tilt level of an optical input signal. A connection state of the matrix switch 11 may be preset, may be automatically set according to a tilt level of an optical input signal, or may be configured to be set from an external system. The control unit 15 further sets an amount of attenuation by the variable attenuator 17 according to an amount of loss of an optical input signal. For example, the control unit 15 is provided by an information processing device such as a computer or a microcomputer. For example, the control unit 15 receives, by an unillustrated reception unit, an instruction (also referred to as a command) included in an optical input signal transmitted from a land station and sets a connection state of the matrix switch 11 in accordance with the received instruction.

Specifically, a tilt level of an optical input signal input to the tilt equalizer device 1 is adjusted in multiple stages by a plurality of equalizers 130, based on a connection state of the matrix switch 11 set in accordance with a control signal from the control unit 15. An optical output signal output from the tilt equalizer device 1 is attenuated based on an amount of attenuation by the variable attenuator 17 set in accordance with a control signal from the control unit 15 and then is output. When there is no need to compensate for a tilt level of an optical input signal or attenuate an optical output signal, the tilt equalizer device 1 may connect the external input terminal to the external output terminal and output an optical input signal on an as-is basis as an optical output signal without attenuating the optical input signal by the variable attenuator 17.

The variable attenuator 17 (also referred to as a variable attenuation means) is connected to an output terminal OUT-n (also referred to as an external output terminal). An amount of attenuation by the variable attenuator 17 is set based on an attenuation setting set according to an amount of loss of an optical input signal. An amount of attenuation by the variable attenuator 17 may be set by the control unit 15 or may be set by an external higher level system. The variable attenuator 17 attenuates an optical output signal output from the output terminal OUT-n by an amount of attenuation based on the attenuation setting and outputs the attenuated optical output signal to the outside.

An attenuation setting of the variable attenuator 17 is set according to an average amount of loss of the equalizer 130 through which an optical input signal passes when the signal is tilt equalized. For example, an attenuation setting value of the variable attenuator 17 is set based on the number of equalizers 130 through which an optical input signal passes. The variable attenuator 17 may also be set in such a way as to attenuate an optical output signal according to characteristics of an optical path such as a difference in an attenuation factor between wavelengths and/or a wavelength characteristic of a transmission line loss.

An attenuation setting of the variable attenuator 17 may be corrected by use of a loss variation when the matrix switch 11 is passed through, a connection loss variation between the matrix switch 11 and the equalizer 130, and a loss variation between equalizers 130. By setting an amount of attenuation in such a way that the level difference between an optical input signal and an optical output signal is kept constant even when a connection setting of the optical matrix switch is changed, a signal strength of an optical signal input to a repeater in a stage subsequent to the tilt equalizer device 1 is kept constant, and degradation in transmission characteristics of the submarine cable system can be prevented.

For example, the variable attenuator 17 is provided by a planar lightwave circuit (PLC). The variable attenuator 17 may be provided by a mechanical type or a magnetic control type. A form in which the variable attenuator 17 is provided is not particularly limited.

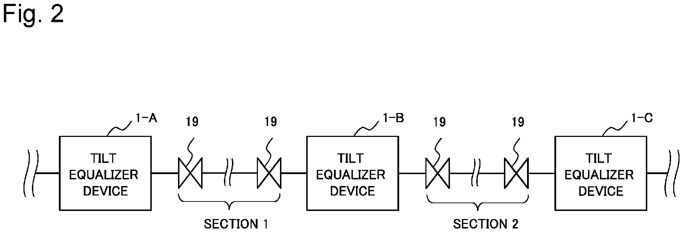

An example of a submarine cable system in which the tilt equalizer device 1 is installed will be described by use of Fig. 2. In the example in Fig. 2, with a tilt equalizer device 1-B at the center, a plurality of repeaters 19 are placed in a section 1 between the tilt equalizer device 1-B and an immediately preceding tilt equalizer device 1-A, and a section 2 between the tilt equalizer device 1-B and an immediately succeeding tilt equalizer device 1-C.

The submarine cable system is designed in such a way that attenuation of an optical signal in an optical cable and amplification by a repeater are balanced, and achieves long-distance transmission of an optical signal. In other words, the submarine cable system is constructed in such a way that a loss between repeaters is constant. The same holds for a section in which a tilt equalizer device is inserted, and a loss caused by the optical cable and the tilt equalizer device is compensated for by amplification by a repeater. Normally, on the basis of the tilt equalizer device 1-A, the tilt equalizer device 1-B, and the tilt equalizer device 1-C having the same amount of loss and optical cables of sections in which the tilt equalizer devices are inserted having the same length, amounts of loss of sections in which tilt equalizer devices are inserted are designed to be the same. However, when an optical cable length cannot have a standard value due to constraints such as a terrain and a route, an amount of loss of a tilt equalizer device is designed to be a value different from the standard value, and the total amounts of loss of the optical cable and the tilt equalizer device are designed to be the same. In that case, specifications of the tilt equalizer device 1-A, the tilt equalizer device 1-B, and the tilt equalizer device 1-C need to be different from one another. In other words, when optical cable losses of sections in which tilt equalizer devices are inserted vary, devices with different specifications are required for the same tilt equalizer device 1. Different specifications for the tilt equalizer device 1 means different specifications for devices to be prepared as spare parts.

The tilt equalizer device 1 according to the present example embodiment controls an amount of attenuation of an optical output signal by the variable attenuator 17 in such a way that a signal strength of an optical signal from a repeater group in a previous section is equal to a signal strength of an optical signal to a repeater group in a subsequent section. Consequently, the present example embodiment allows standardization of the tilt equalizer devices 1 connected to sections with different losses. Standardization of the tilt equalizer devices 1 in a plurality of sections further allows standardization of spare parts for the tilt equalizer devices 1. In other words, use of the tilt equalizer device 1 according to the present example embodiment eliminates the need for preparing spare parts for a device a specification of which varying for each of sections with different losses and therefore can reduce an amount of investment in and a maintenance cost of the submarine cable system.

As described above, the tilt equalizer device according to the present example embodiment includes an optical matrix switch, an equalizer group, a control means, and a variable attenuator. The optical matrix switch includes a first terminal group including at least two first terminals and a second terminal group including at least two second terminals. The equalizer group includes at least two equalizers, an input end of each of the equalizers being connected to one of the second terminals included in the second terminal group, and an output end of each equalizer being connected to one of the first terminals included in the first terminal group. The control means changes a connection state between the first terminal and the second terminal. The variable attenuator is connected to one of the second terminals included in the second terminal group and attenuates an input optical signal.

For example, each equalizer included in the equalizer group can adjust a tilt level of an optical signal input from the input end and output the tilt-level-adjusted optical signal from the output end.

For example, the control means sets an amount of attenuation in the variable attenuator, based on an amount of loss of an optical signal externally input to the optical matrix switch.

For example, the control means sets, to the variable attenuator, an amount of attenuation equalizing the difference between a signal strength of an externally input optical signal and a signal strength of an optical signal output to the outside. For example, the control means sets an amount of attenuation by the variable attenuator, based on the number of equalizers passing an optical signal. For example, the control means sets a larger amount of attenuation by the variable attenuator as the number of the equalizers passing an optical signal decreases.

In other words, by using the optical matrix switch, the tilt equalizer device according to the present example embodiment can decrease a larger quantity of optical devices (parts) compared with a variable tilt device using a common optical switch. Consequently, the tilt equalizer device according to the present example embodiment can increase the number of systems (number of cores) that can be equalized by a single device and therefore can increase the number of cores in a submarine cable system. Increase in the number of cores in the submarine cable system facilitates system expansion.

Further, the tilt equalizer device according to the present example embodiment adjusts an amount of attenuation of an optical output signal according to an amount of loss of an optical input signal, and therefore a signal strength of the optical output signal to a repeater in a subsequent stage is kept constant. Consequently, the tilt equalizer device according to the present example embodiment keeps a signal strength of an optical signal transmitted in a submarine cable system constant and therefore can prevent degradation in transmission characteristics of the submarine cable system.

Further, according to the present example embodiment, by controlling, by the variable attenuator, a difference in a loss of a tilt equalizer device caused by a difference in an optical cable length of a section in which the tilt equalizer device is inserted, tilt equalizer devices can be standardized over a plurality of sections. Consequently, the present example embodiment can reduce an amount of investment in and a maintenance cost of a submarine cable system.

In other words, the tilt equalizer device according to the present example embodiment can reduce the number of optical devices while maintaining the number of settings of a tilt level and also can output an optical signal with a constant signal strength.

### (Second Example Embodiment)

Next, a tilt equalizer device according to a second example embodiment of the present invention will be described with reference to drawings. An example of configuring an equalizer group with four equalizers will be described in the present example embodiment.

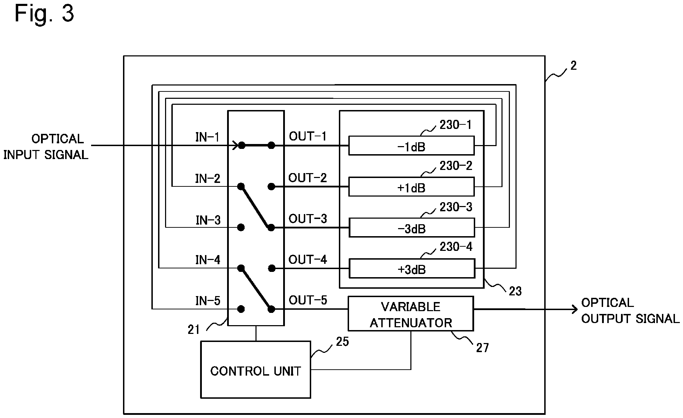

Fig. 3 is a schematic diagram illustrating an example of a configuration of a tilt equalizer device 2 (also referred to as an equalizer device) according to the present example embodiment. As illustrated in Fig. 3, the tilt equalizer device 2 includes a matrix switch 21, an equalizer group 23, a control unit 25, and a variable attenuator 27. The equalizer group 23 is configured with a plurality of equalizers 230. Fig. 3 illustrates an example of the equalizer group 23 being configured with four equalizers 230-1 to 4.

The matrix switch 21 includes five input terminals IN-1 to 5 and five output terminals OUT-1 to 5.

An optical input signal is externally input to one of the plurality of input terminals IN. Fig. 3 illustrates an example of an optical input signal being input to the input terminal IN-1. For example, an optical input signal from a repeater in a previous stage is input to the input terminal IN-1 (also referred to as an external input terminal).

Each of the plurality of input terminals IN is connected to one of the plurality of output terminals OUT in accordance with a control signal from the control unit 25. Fig. 3 illustrates an example of the input terminal IN-1 is connected to the output terminal OUT-1, the input terminal IN-2 is connected to the output terminal OUT-3, and the input terminal IN-4 is connected to the output terminal OUT-5, respectively.

An optical output signal is output from one of the plurality of output terminals OUT. Fig. 3 illustrates an example of an optical output signal being output from the output terminal OUT-5. For example, an optical output signal output from the output terminal OUT-5 is attenuated in the variable attenuator 27 and then output toward a repeater in a subsequent stage.

An output terminal OUT other than the external output terminal is connected to one of the plurality of equalizers 230 constituting the equalizer group 23. Fig. 3 illustrates an example of the output terminals OUT-1 to 4 being connected to the equalizers 230-1 to 4, respectively.

The equalizer group 23 is configured with a plurality of equalizers 230 with different tilt levels. Fig. 3 illustrates an example of the equalizer group 23 configured with the four equalizers 230-1 to 4. In Fig. 3, as an example, tilt levels adjusted by the equalizers 230-1 to 4 are -1 dB, +1 dB, -3 dB, and +3 dB, respectively, but are not limited to the above numerical values. The equalizers 230 with the tilt levels can be provided by use of known optical filters or the like. A tilt level corresponds to a gradient of a transmissivity in a wavelength range of an optical input signal.

An input end of each of the plurality of equalizers 230 constituting the equalizer group 23 is connected to one of the output terminals OUT on the matrix switch 21. In the example in Fig. 3, the equalizers 230-1 to 4 are connected to the output terminals OUT-1 to 4, respectively.

An output end of each of the plurality of equalizers 230 constituting the equalizer group 23 is connected to one of the input terminals IN on the matrix switch 21. In the example in Fig. 3, the equalizers 230-1 to 4 are connected to the input terminals IN-2 to 5, respectively.

A tilt level of an optical input signal input to an equalizer 230 is adjusted by the equalizer 230. The tilt-level-adjusted optical signal is tilt level adjusted again by another equalizer 230 through the matrix switch 21 or is output as an optical output signal. Specifically, a tilt level of an optical input signal input to an equalizer 230 is compensated for by the total of tilt levels adjusted by equalizers 230 connected to output terminals OUT connected to input terminals IN on the matrix switch 21. In the example of a connection state in Fig. 3, a tilt level of an optical input signal is adjusted by the total of -4 dB including -1 dB by the equalizer 230-1 and -3 dB by the equalizer 230-3.

The control unit 25 transmits, to the matrix switch 21, a control signal for changing a connection state of the matrix switch 21 according to a tilt level of an optical input signal. A connection state of the matrix switch 21 may be preset, may be automatically set according to a tilt level of an optical input signal, or may be configured to be set from an external system. The control unit 25 further sets an amount of attenuation by the variable attenuator 27 according to an amount of loss of an optical input signal.

Specifically, a tilt level of an optical input signal input to the tilt equalizer device 2 is adjusted in multiple stages by a plurality of equalizers 230, based on a connection state of the matrix switch 21 set in accordance with a control signal from the control unit 25. An optical output signal output from the tilt equalizer device 2 is attenuated based on an amount of attenuation by the variable attenuator 27 set in accordance with a control signal from the control unit 25 and then is output. When there is no need to compensate for a tilt level of an optical input signal or attenuate an optical output signal, the tilt equalizer device 2 may connect the input terminal IN-1 to the output terminal OUT-5 and output an optical input signal on an as-is basis as an optical output signal without attenuating the optical input signal by the variable attenuator 27.

The variable attenuator 27 is connected to the output terminal OUT-5 being an external output terminal. An amount of attenuation by the variable attenuator 27 is set based on an attenuation setting set according to an amount of loss of an optical input signal. An amount of attenuation by the variable attenuator 27 may be set by the control unit 25 or may be set by an external higher level system. The variable attenuator 27 attenuates an optical output signal output from the output terminal OUT-5 by an amount of attenuation based on the attenuation setting and outputs the attenuated optical output signal to the outside.

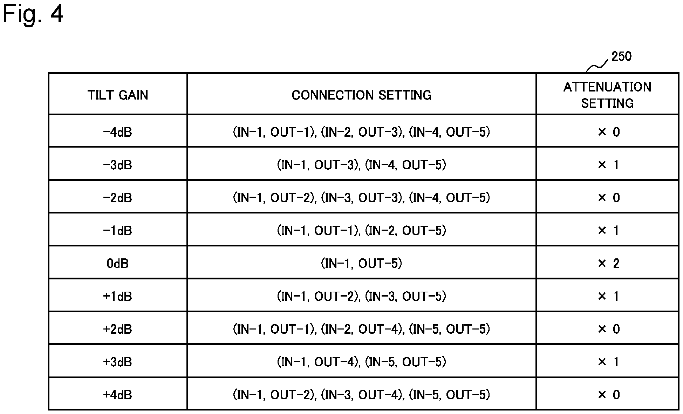

Fig. 4 illustrates a switch setting table 250 (also referred to as a setting table) summarizing switch connection settings for compensating for a tilt level of an optical profile in a range of -4 dB to +4 dB. For example, the switch setting table 250 is stored in a storage device (unillustrated) in the control unit 25.

Combinations of the input terminals 1 to 5 with the output terminals 1 to 5, each combination being related to each tilt level of compensation, are indicated in parentheses in connection setting fields in the switch setting table 250. In the example of the switch setting table 250, a desired tilt level can be set by setting a combination of one of the input terminals 1 to 5 with one of the output terminals 1 to 5. An attenuation setting field in the switch setting table 250 indicates an amount of attenuation set for each connection setting between an input terminal IN and an output terminal OUT. In the switch setting table 250, an amount of attenuation set to the variable attenuator 27 is set to an average amount of loss of the equalizer 230 multiplied by a factor of 0 to 2. As illustrated in the switch setting table 250, the tilt equalizer device 2 can compensate for a tilt level of an optical profile in a range of -4 dB to +4 dB in units of dB.

For example, when compensating for a tilt level of an optical profile by -4 dB, the control unit 25 outputs a control signal for closing (IN-1, OUT-1), (IN-2, OUT-3), and (IN-4, OUT-5) to the matrix switch 21. Consequently, the input terminal IN-1, the input terminal IN-2, and the input terminal IN-4 are connected to the output terminal OUT-1, the output terminal OUT-3, and the output terminal OUT-5, respectively. A tilt level of an optical input signal input from the input terminal IN-1 on the matrix switch 21 is adjusted by the equalizer 230-1 and the equalizer 230-3. Consequently, the tilt level of the optical input signal input to the tilt equalizer device 2 is compensated for by -4 dB, and the compensated optical signal is output to the variable attenuator 27 from the output terminal OUT-5 as an optical output signal. An attenuation setting for compensating for a tilt level of an optical profile by -4 dB is a multiplying factor of 0, and therefore the optical output signal input to the variable attenuator 27 is output to the outside on an as-is basis without being attenuated. For example, an attenuation setting for an adjustment level of a tilt level for 0 dB is a multiplying factor of 2, and therefore the tilt equalizer device 2 does not compensate for a tilt level of an optical input signal, attenuates the optical signal strength, based on the attenuation setting, and then outputs the attenuated optical signal as an optical output signal.

For example, the control unit in the tilt equalizer device according to the present example embodiment includes a setting table summarizing connection states set to a first terminal and a second terminal group in association with tilt levels to be compensated for, and attenuation settings set to the variable attenuator according to an amount of loss of an externally input optical input signal. The control unit changes a connection state between a first terminal included in the first terminal group and a second terminal included in the second terminal group according to a tilt level set to an optical input signal. The control unit also sets an amount of attenuation by the variable attenuator, based on an attenuation setting set in association with a tilt level set to an optical input signal.

As described above, by using a multi-input multi-output optical matrix switch, the tilt equalizer device according to the present example embodiment can decrease a larger quantity of optical devices (parts) compared with a variable tilt device using a common optical switch. Consequently, the tilt equalizer device according to the present example embodiment can increase the number of systems (number of cores) that can be equalized by a single device and therefore can increase the number of cores in a submarine cable system. Increase in the number of cores in the submarine cable system facilitates system expansion.

Further, the tilt equalizer device according to the present example embodiment adjusts an amount of attenuation of an optical output signal according to an amount of loss of an optical input signal, and therefore a signal strength of the optical output signal to a repeater in a subsequent stage is kept constant. Consequently, the tilt equalizer device according to the present example embodiment keeps a signal strength of an optical signal transmitted in a submarine cable system constant and therefore can prevent degradation in transmission characteristics of the submarine cable system.

Further, according to the present example embodiment, by controlling, by the variable attenuator, a difference in a loss of a tilt equalizer device caused by a difference in an optical cable length of a section in which the tilt equalizer device is inserted, tilt equalizer devices can be standardized over a plurality of sections. Consequently, the present example embodiment can reduce an amount of investment in and a maintenance cost of a submarine cable system.

The tilt equalizer device 100 based on the related art illustrated in Fig. 8 requires 11 optical devices (two optical switches and nine equalizers) in order to adjust a tilt level in an adjustment range of -4 to +4 dB in units of dB. On the other hand, the tilt equalizer device 2 according to the present example embodiment can be configured with six optical devices (one optical matrix switch, four equalizers, and one variable attenuator) in order to compensate for a tilt level in the same adjustment range (-4 to +4 dB).

In other words, by connecting a plurality of equalizers between input and output terminals on the optical matrix switch and changing a connection setting of the optical matrix switch, the tilt equalizer device according to the present example embodiment can secure an adjustment range of a tilt level even when the number of optical devices is decreased.

### (Third Example Embodiment)

Next, a tilt equalizer device according to a third example embodiment of the present invention will be described with reference to drawings. An example of configuring an equalizer group with six equalizers will be described in the present example embodiment.

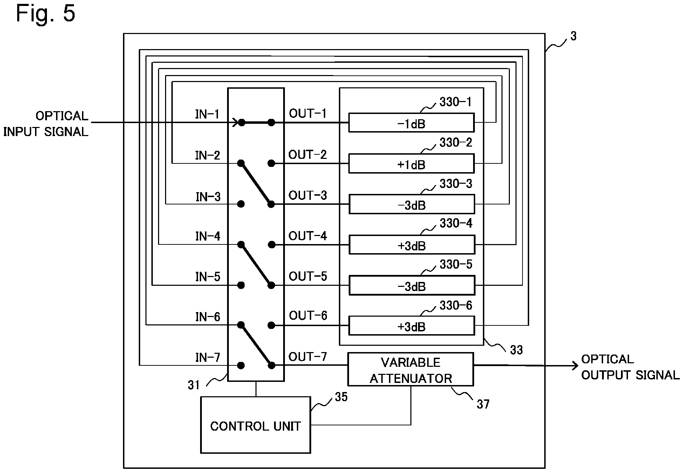

Fig. 5 is a schematic diagram illustrating an example of a configuration of a tilt equalizer device 3 (also referred to as an equalizer device) according to the present example embodiment. As illustrated in Fig. 5, the tilt equalizer device 3 includes a matrix switch 31, an equalizer group 33, a control unit 35, and a variable attenuator 37. The equalizer group 33 is configured with a plurality of equalizers 330. Fig. 5 illustrates an example of the equalizer group 33 being configured with six equalizers 330-1 to 6.

The matrix switch 31 includes seven input terminals IN-1 to 7 and seven output terminals OUT-1 to 7.

An optical input signal is externally input to one of the plurality of input terminals IN. Fig. 5 illustrates an example of an optical input signal being input to the input terminal IN-1. For example, an optical input signal from a repeater in a previous stage is input to the input terminal IN-1 (also referred to as an external input terminal).

Each of the plurality of input terminals IN is connected to one of the plurality of output terminals OUT in accordance with a control signal from the control unit 35. Fig. 5 illustrates an example of the input terminal IN-1 is connected to the output terminal OUT-1, the input terminal IN-2 is connected to the output terminal OUT-3, the input terminal IN-4 is connected to the output terminal OUT-5, and the input terminal IN-6 is connected to the output terminal OUT-7, respectively.

An optical output signal is output from one of the plurality of output terminals OUT. Fig. 5 illustrates an example of an optical output signal being output from the output terminal OUT-7. For example, an optical output signal output from the output terminal OUT-7 is attenuated in the variable attenuator 37 and then is output toward a repeater in a subsequent stage.

An output terminal OUT other than the external output terminal is connected to one of the plurality of equalizers 330 constituting the equalizer group 33. Fig. 5 illustrates an example of the output terminals OUT-1 to 6 being connected to the equalizers 330-1 to 6, respectively.

The equalizer group 33 is configured with a plurality of equalizers 330. Fig. 5 illustrates an example of the equalizer group 33 being configured with the six equalizers 330-1 to 6. In the example in Fig. 5, tilt levels adjusted by the equalizers 330-1 to 6 are -1 dB, +1 dB, -3 dB, +3 dB, -3 dB, and +3 dB, respectively.

An input end of each of the plurality of equalizers 330 constituting the equalizer group 33 is connected to one of the output terminals OUT on the matrix switch 31. In the example in Fig. 5, the equalizers 330-1 to 6 are connected to the output terminals OUT-1 to 6, respectively.

An output end of each of the plurality of equalizers 330 constituting the equalizer group 33 is connected to one of the input terminals IN on the matrix switch 31. In the example in Fig. 5, the equalizers 330-1 to 6 are connected to the input terminals IN-2 to 7, respectively.

A tilt level of an optical input signal input to an equalizer 330 is adjusted by the equalizer 330. The tilt-level-adjusted optical signal is tilt level adjusted again by another equalizer 330 through the matrix switch 31 or is output as an optical output signal. Specifically, a tilt level of an optical input signal input to an equalizer 330 is compensated for by the total of tilt levels adjusted by equalizers 330 connected to output terminals OUT connected to input terminals IN on the matrix switch 31. In the example of a connection state in Fig. 5, a tilt level of an optical input signal is adjusted by the total of -7 dB including -1 dB by the equalizer 330-1, -3 dB by the equalizer 330-3, and -3 dB by the equalizer 330-5.

The control unit 35 transmits, to the matrix switch 31, a control signal for changing a connection state of the matrix switch 31 according to a tilt level of an optical input signal. A connection state of the matrix switch 31 may be preset, may be automatically set according to a tilt level of an optical input signal, or may be configured to be set from an external system. The control unit 35 further sets an amount of attenuation by the variable attenuator 37 according to an amount of loss of an optical input signal.

Specifically, a tilt level of an optical input signal input to the tilt equalizer device 3 is adjusted in multiple stages by a plurality of equalizers 330, based on a connection state of the matrix switch 31 set in accordance with a control signal from the control unit 35. An optical output signal output from the tilt equalizer device 3 is attenuated based on an amount of attenuation by the variable attenuator 37 set in accordance with a control signal from the control unit 35 and then is output. When there is no need to adjust a tilt level of an optical input signal, the tilt equalizer device 3 may connect the input terminal IN-1 to the output terminal OUT-7 and output an optical input signal on an as-is basis as an optical output signal without attenuating the optical input signal by the variable attenuator 37.

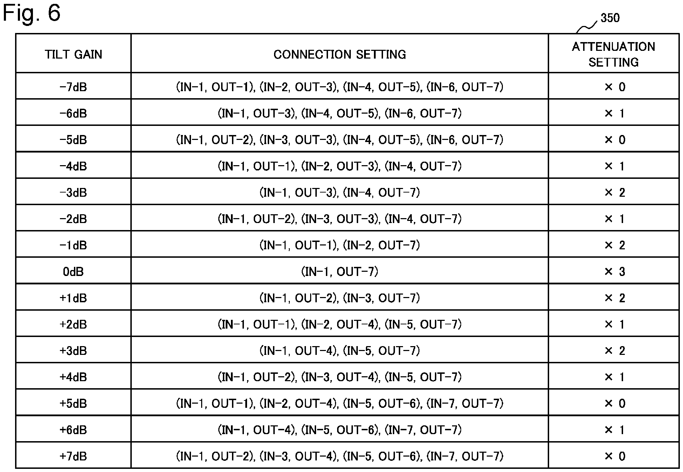

Fig. 6 is a switch setting table 350 (also referred to as a setting table) summarizing switch connection settings for compensating for a tilt level of an optical profile in a range of -7 dB to +7 dB. For example, the switch setting table 350 is stored in a storage device (unillustrated) in the control unit 35.

Combinations of the input terminals 1 to 7 with the output terminals 1 to 7, each combination being related to each tilt level of compensation, are indicated in parentheses in connection setting fields in the switch setting table 350. In the example of the switch setting table 350, a desired tilt level can be set by setting a combination of one of the input terminals 1 to 7 with one of the output terminals 1 to 7. An attenuation setting field in the switch setting table 350 indicates an amount of attenuation set for each connection setting between an input terminal IN and an output terminal OUT. In the switch setting table 350, an amount of attenuation set to the variable attenuator 37 is set to an average amount of loss of the equalizer 330 multiplied by a factor of 0 to 3. As illustrated in the switch setting table 350, the tilt equalizer device 3 can compensate for a tilt level of an optical profile in a range of -7 dB to +7 dB in units of dB.

For example, when compensating for a tilt level of an optical profile by -7 dB, the control unit 35 outputs a control signal for closing (IN-1, OUT-1), (IN-2, OUT-3), (IN-4, OUT-5), and (IN-6, OUT-7) to the matrix switch 31. Consequently, the input terminal IN-1, the input terminal IN-2, the input terminal IN-4, and the input terminal IN-6 are connected to the output terminal OUT-1, the output terminal OUT-3, the output terminal OUT-5, and the output terminal OUT-7, respectively. A tilt level of an optical input signal input from the input terminal IN-1 on the matrix switch 31 is adjusted by the equalizer 330-1, the equalizer 330-3, and the equalizer 330-5. Consequently, the tilt level of the optical input signal input to the tilt equalizer device 3 is adjusted by -7 dB and then is output to the variable attenuator 37 from the output terminal OUT-10 as an optical output signal. An attenuation setting for compensating for a tilt level of an optical profile by -7 dB is a multiplying factor of 0, and therefore the optical output signal input to the variable attenuator 27 is output to the outside on an as-is basis without being attenuated. For example, an attenuation setting for a tilt level of 0 dB is a multiplying factor of 3, and therefore the tilt equalizer device 2 does not compensate for a tilt level of an optical input signal, attenuates the optical signal strength, based on the attenuation setting, and outputs the attenuated optical signal as an optical output signal.

As described above, by using a multi-input multi-output optical matrix switch, the tilt equalizer device according to the present example embodiment can extend an adjustment range of a tilt level compared with the tilt equalizer device according to the second example embodiment. Consequently, the tilt equalizer device according to the present example embodiment can increase the number of systems (number of cores) that can be equalized by a single device and therefore can further increase the number of cores in a submarine cable system.

For example, the control unit in the tilt equalizer device according to the present example embodiment includes a setting table summarizing connection states set to first terminal and second terminal groups in association with tilt levels to be compensated for, and attenuation settings of the variable attenuator. The control unit changes a connection state between a first terminal included in the first terminal group and a second terminal included in the second terminal group according to a tilt level set to an optical input signal and also sets an amount of attenuation of an optical output signal.

Further, the tilt equalizer device according to the present example embodiment adjusts an amount of attenuation of an optical output signal according to an amount of loss of an optical input signal, and therefore a signal strength of the optical output signal to a repeater in a subsequent stage is kept constant. Consequently, the tilt equalizer device according to the present example embodiment keeps a signal strength of an optical signal transmitted in a submarine cable system constant and therefore can prevent degradation in transmission characteristics of the submarine cable system.

Further, according to the present example embodiment, by controlling, by the variable attenuator, a difference in a loss of a tilt equalizer device caused by a difference in an optical cable length of a section in which the tilt equalizer device is inserted, tilt equalizer devices can be standardized over a plurality of sections. Consequently, the present example embodiment can reduce an amount of investment in and a maintenance cost of a submarine cable system.

The tilt equalizer device 100 based on the related art illustrated in Fig. 8 requires 11 optical devices (two optical switches and nine equalizers) in order to adjust a tilt level in an adjustment range of -4 to +4 dB in units of dB. The tilt equalizer device according to the present example embodiment can be configured with eight optical devices (one optical matrix switch, six equalizers, and one variable attenuator) in order to compensate for a tilt level in a wider adjustment range (-7 to +7 dB).

In other words, the tilt equalizer device according to the present example embodiment can widen an adjustment range of a tilt level with a smaller number of optical devices compared with the tilt equalizer device based on the related art, even when the number of equalizers between input and output terminals on the optical matrix switch is increased.

### (Fourth Example Embodiment)

Next, a communication system according to a fourth example embodiment of the present invention will be described with reference to a drawing. The communication system according to the present example embodiment includes at least one of the tilt equalizer devices (also referred to as equalizer devices) according to the first to third example embodiments.

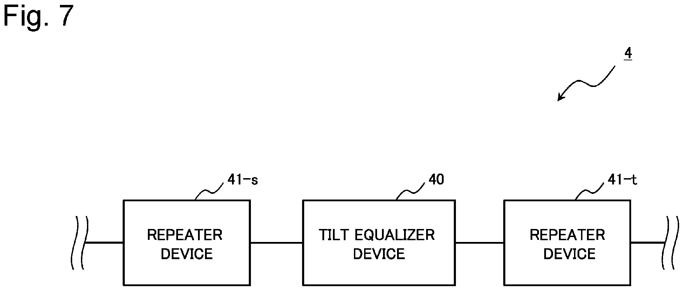

Fig. 7 is a block diagram illustrating an example of a configuration of a communication system 4 according to the present example embodiment. As illustrated in Fig. 7, the communication system 4 includes a plurality of repeater devices 41 and at least one tilt equalizer device 40. Fig. 7 illustrates an example of placing the tilt equalizer device 40 between a repeater device 41-s and a repeater device 41-t (where s is a natural number, and t is a natural number greater than s). The plurality of repeater devices 41 (also referred to as repeaters) are connected to the tilt equalizer device 40 by a submarine cable (also referred to as an optical cable) including a bundle of a plurality of optical fibers. Both ends of the submarine cable in the communication system 4 are connected to facilities such as a power feeding facility, a monitoring facility, and a communication device that are installed in an unillustrated landing station. The numbers of tilt equalizer devices 40 and repeater devices 41 are not particularly limited.

For example, when an optical input signal is input from the repeater device 41-s in a previous stage, the tilt equalizer device 40 compensates for a tilt level of the input optical input signal under a set condition. The tilt equalizer device 40 attenuates a signal strength of the tilt-level-compensated optical signal by an amount of attenuation based on an attenuation setting set according to an amount of loss of the optical input signal. The tilt equalizer device 40 outputs the signal-strength-corrected optical output signal to the repeater device 41-t in a subsequent stage.

As described above, the communication device according to the present example embodiment includes an equalizer device, repeater devices, and an optical cable. The equalizer device included in the communication device according to the present example embodiment includes an optical matrix switch, an equalizer group, a control means, and a variable attenuator. The optical matrix switch includes a first terminal group including at least two first terminals and a second terminal group including at least two second terminals. The equalizer group includes at least two equalizers, an input end of each equalizer being connected to one of the second terminals included in the second terminal group and also an output end of each equalizer being connected to one of the first terminals included in the first terminal group. The variable attenuator is connected to one of the second terminals included in the second terminal group and attenuates an input optical signal. The control means changes a connection state between a first terminal included in the first terminal group and a second terminal included in the second terminal group and also sets an amount of attenuation in the variable attenuator. The optical cable connects a repeater to the equalizer device. The equalizer device inputs an optical signal output from a repeater in a previous stage as an optical input signal. The equalizer device compensates for a tilt level of the input optical input signal and attenuates a signal strength of the tilt-level-compensated optical signal in such a way as to bring the signal strength close to a signal strength of the optical input signal. The equalizer device outputs the signal-strength-attenuated optical signal to a repeater in a subsequent stage as an optical output signal.

In other words, the communication system according to the present example embodiment can provide a communication system including an equalizer device being capable of reducing the number of optical devices while maintaining the number of settings of a tilt level and also being capable of outputting an optical signal with a constant signal strength.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2018-33232, filed on February 27, 2018, the disclosure of which is incorporated herein in its entirety by reference.

### [Reference signs List]

- 1, 2, 3: Tilt equalizer device
- 4: Communication system
- 11, 21, 31: Matrix switch
- 13, 23, 33: Equalizer group
- 15, 25, 35: Control unit
- 17, 27, 37: Variable attenuator
- 130, 230, 330: Equalizer

## Claims

1. An equalizer device comprising:
an optical matrix switch including a first terminal group including at least two first terminals and a second terminal group including at least two second terminals;
an equalizer group including at least two equalizers, an input end of each of the equalizers being connected to one of the second terminals included in the second terminal group, and an output end of each of the equalizers being connected to one of the first terminals included in the first terminal group;
a variable attenuator being connected to the second terminal in a last stage included in the second terminal group and attenuating an input optical signal; and
control means that changes a connection state between the first terminal and the second terminal, and sets an amount of attenuation in the variable attenuator.

2. The equalizer device according to claim 1, wherein
each of the equalizers included in the equalizer group
adjusts a tilt level of an optical signal input from the input end and outputs the tilt-level-adjusted optical signal from the output end.

3. The equalizer device according to claim 1 or 2, wherein
the control means is configured to
set an amount of attenuation in the variable attenuator according to an amount of loss of an optical signal externally input to the optical matrix switch.

4. The equalizer device according to claim 3, wherein
the control means is configured to
set an amount of attenuation in the variable attenuator, based on a number of the equalizer passing an optical signal.

5. The equalizer device according to claim 4, wherein
the control means is configured to
set a larger amount of attenuation in the variable attenuator as a number of the equalizer passing an optical signal decreases.

6. The equalizer device according to any one of claims 1 to 5, wherein
the control is configured to:
include a setting table summarizing a connection state set to the first terminal and the second terminal group in association with a tilt level of compensation, and an attenuation setting set to the variable attenuator according to an amount of loss of an externally input optical input signal;
change a connection state between the first terminal included in the first terminal group and the second terminal included in the second terminal group according to a tilt level set to the optical input signal; and
set an amount of attenuation in the variable attenuator, based on the attenuation setting set in association with a tilt level set to the optical input signal.

7. A communication system comprising:
an equalizer device including:
an optical matrix switch including a first terminal group including at least two first terminals and a second terminal group including at least two second terminals;
an equalizer group including at least two equalizers, an input end of each equalizer being connected to one of the second terminals included in the second terminal group and also an output end of each equalizer being connected to one of the first terminals included in the first terminal group;
a variable attenuator being connected to one of the second terminals included in the second terminal group and attenuating an input optical signal;
control means that changes a connection state between the first terminal and the second terminal, and setting an amount of attenuation by the variable attenuator;
at least two repeaters; and
an optical cable connecting the repeater to the equalizer device.

8. The communication system according to claim 7, wherein
the equalizer device
inputs an optical signal output from the repeater in a previous stage as an optical input signal, compensates for a tilt level of the input optical input signal, attenuates a signal strength of a tilt-level-compensated optical signal in such a way as to bring the signal strength close to a signal strength of the optical input signal, and outputs a signal-strength-attenuated optical signal to the repeater in a subsequent stage as an optical output signal.

9. An equalization method in an equalizer device including:
an optical matrix switch including a first terminal group including at least two first terminals and a second terminal group including at least two second terminals;
an equalizer group including at least two equalizers, an input end of each of the equalizers being connected to one of the second terminals included in the second terminal group, and an output end of each of the equalizer being connected to one of the first terminals included in the first terminal group; and
a variable attenuator being connected to one of the second terminals included in the second terminal group and attenuating an optical signal input to the optical matrix switch according to an amount of loss of the optical signal, the equalization method comprising
changing a connection state between the first terminal and the second terminal,
compensating for a tilt level of an externally input optical signal by setting an amount of attenuation by the variable attenuator according to an amount of loss of an optical signal input to the optical matrix switch and
outputting a tilt-level-compensated optical signal as an optical output signal.

10. The equalization method according to claim 9, further comprising
setting an amount of attenuation in the variable attenuator according to an amount of loss of an optical signal externally input to the optical matrix switch.
